# EUROPÄISCHE PATENTSCHRIFT

(11) **EP 0 979 137 B1**
(45) Veröffentlichungstag und Bekanntmachung des Hinweises auf die Patenterteilung: **16.04.2003**
(21) Anmeldenummer: 98932017.1
(22) Anmeldetag: 25.04.1998
(51) Int. Cl.: B01D 53/86, B01J 32/00, F01N 3/02

(54) **VERFAHREN ZUM BETRIEB EINES ELEKTRISCH BEHEIZTEN KATALYSATORS**
METHOD FOR OPERATING AN ELECTRICALLY HEATED CATALYZER
PROCEDE PERMETTANT DE FAIRE FONCTIONNER UN CATALYSEUR CHAUFFE ELECTRIQUEMENT

(30) Priorität: 30.04.1997 DE 19718239
(43) Veröffentlichungstag der Anmeldung: 16.02.2000
(73) Patentinhaber: Forschungszentrum Jülich GmbH, 52425 Jülich (DE); Dornseiffer, Jürgen, 52072 Aachen (DE)
(72) Erfinder: DORNSEIFFER, Jürgen, D-52072 Aachen (DE); HACKFORT, Helmut, D-50933 Köln (DE)
(86) Internationale Anmeldenummer: DE9801173
(87) Internationale Veröffentlichungsnummer: WO98048925

(56) Entgegenhaltungen:
- EP-A- 0 327 653
- DATABASE WPI Section Ch, Week 9225 Derwent Publications Ltd., London, GB; Class J04, AN 92-203759 XP002078496 & JP 04 132 662 A (SHARP KK)
- DATABASE WPI Section Ch, Week 8347 Derwent Publications Ltd., London, GB; Class H06, AN 83-823211 XP002078497 & JP 58 174 216 A (NGK SPARK PLUG CO LTD)
- DATABASE WPI Section Ch, Week 8128 Derwent Publications Ltd., London, GB; Class J01, AN 81-50719D XP002078498 & JP 56 060 647 A (TDK ELECTRONICS CO LTD)

## Beschreibung

Die Erfindung betrifft ein Verfahren für den Betrieb eines heterogenen Katalysators.

Katalysatoren beschleunigen Reaktionsabläufe bzw. lenken Reaktionsabläufe in eine bestimmte Richtung (Selektivität). Der chemische Wirkungsgrad, also der Umsatz zum gewünschten Produkt, wird so erhöht.

Grundsätzlich beeinflußt ein Katalysator nur die Kinetik der betrachteten Reaktion. Die thermodynamischen Verhältnisse verändern sich nicht. Die Lage der chemischen Reaktionsgleichgewichte sowie die Enthalpie- und Entropieverhältnisse bleiben erhalten.

Es wird zwischen homogenen und heterogenen Katalysatoren unterschieden. Katalysatoren und Reaktanden befinden sich beim zuletzt genannten Typ in unterschiedlichen Phasen. Diese oft als "Kontakte" bezeichneten Katalysatoren werden hauptsächlich für die Beschleunigung von Gasphasenreaktionen wie Oxidation, Hydrierung oder Dampfreformierung eingesetzt.

Beim heterogenen Katalysator ist werden die Edukte auf der Oberfläche des Katalysators adsorbiert, in reaktionsfähige Spezies überführt, über Diffusionseffekte die Reaktion vermittelt und abschließend die Produkte desorbiert.

Für die Überführung in die reaktionsfähigen Spezies wird unabhängig vom betrachteten Reaktionssystem Energie benötigt, die im folgenden Aktivierungsenergie des Katalysators genannt wird.

Bei endothermen Reaktionen (z.B. Dampfreformierung muß die Aktivierungsenergie des Katalysators schon aus thermodynamischen Gründen permanent von außen zugeführt werden. Bei exothermen Prozessen (z. B. katalytische Oxidationen) wird dieser von außen zugeführte Energiebedarf nur zum "Anspringen" der Reaktion benötigt. Im weiteren Verlauf deckt die freiwerdende Reaktionsenthalpie die Aktivierungsenergie des Katalysators.

Für eine effektive Beschleunigung einer Reaktion muß sowohl ein Katalysator mit ausreichendem Umsetzungsvermögen (Aktivität) als auch eine Mindestmenge an Energie zur Verfügung stehen.

Beim großtechnischen Einsatz von Katalysatoren ist die Bereitstellung von Energie hinreichend durch den Einsatz optimierter Reaktor- und Brennersysteme bzw. durch Vorheizen der Edukte gelöst. Im kleintechnischen Maßstab sind diese Lösungen zu aufwendig.

Ein Beispiel für einen kleintechnischen Maßstab stellt der Abgaskatalysator eines Ottomotors dar. Dieser stellt einen glücklichen Ausnahmefall dar, da in der Regel die Abgastemperatur und -menge ausreicht, um hinreichend Energie für einen beschleunigten Schadstoffabbau bereitzustellen. Allerdings funktionieren Dreiwegekatalysatoren in Autos in der Kaltstart- oder Leerlaufphase nicht oder nur schlecht, da das Abgas dann nicht genügend thermische Energie zuzuführen vermag.

Aus der Druckschrift DE 41 10 395 A1 ist zur Lösung der vorgenannten Probleme eine Vorrichtung vorgesehen, die eine elektrische Heizung umfaßt. Die elektrische Heizung weist parallel verlaufende wabenartige Kanäle auf. Ein Startkatalysator befindet sich schichtförmig in den wabenartigen Kanälen.

Der Katalysator ist durch die aus der Druckschrift DE 41 10 395 A1 bekannten Heizung beheizbar. Die vom Startkatalysator benötigte Heizenergie kann schnell zur Verfügung gestellt werden.

Aus JP 58 174 216 ist ebenfalls eine wabenartig strukturierte, elektrisch beheizbare Vorrichtung bekannt, in dessen Hohlräume ein Filtermedium eingelagert ist, auf dem sich ein Verbrennungskatalysator befindet. Dieser Filter dient dem Abbrandt von feinen verbrennbaren Partikeln aus Abgasen. Aus EP 0 327 653 A1 ist ein Rußfilter bekannt, dessen elektrisch leitfähige Siliciumcarbid-Filterkörner mit Katalysator, sich in loser Schüttung in einem ebenfalls elektrisch leitenden Filtergehäuse befinden. Der Abbrandt der auf den Filterkörnern befindlichen Rußpartikel erfolgt durch ein Aufheizen des Filters mittels einer Induktionsspule auf Temperaturen oberhalb von 700°C.

In JP 4 132 662 wird ein gesintertes keramisches Material aus Siliciumcarbid mit einem Katalysator zur Entfernung von Geruchsstoffen offenbart. Dieses leitfähige Material weist poröse Eigenschaften auf und ist mittels Zufuhr von elektrischer Energie beheizbar.

Aus JP 56 060 647 ist ein Katalysator zur Oxidation von verbrennbaren Geruchssubstanzen bzw. Gaskomponenten aus Rauch bekannt. Diese Vorrichtung besteht aus einem halbleitenden, mit vielen Löchern oder Passagen durchsetzten Körper, auf dessen innerer Oberfläche eine keramische Schicht aufgebracht ist, die als Katalysatorträger fungiert.

Nach dem Stand der Technik ist kein Verfahren oder eine Vorrichtung offenbart, welche die Energiezufuhr so reguliert, das diese der Aktivierungsenergie einer rein katalysierten Reaktion entspricht.

Aufgabe der Erfindung ist die Schaffung eines Verfahrens mit dem ein heterogener Katalysator wirtschaftlich im kleintechnischen Maßstab betrieben werden kann und das einen weiter verbesserten Wirkungsgrad ermöglicht.

Die Aufgabe der Erfindung wird durch ein Verfahren mit den Merkmalen des Hauptanspruchs gelöst. Vorteilhafte Ausgestaltungen ergeben sich aus den rückbezogenen Merkmalen.

Anspruchsgemäß wird die Aufgabe durch die Verwendung einer Vorrichtung mit einem elektrisch beheizbaren, heterogen Katalysator gelöst. Die hierfür vorgesehene elektrische Heizung weist eine offene Porosität auf. Die anspruchsgemäße Porosität entspricht der aus der Druckschrift DE 41 30 630 C2 bekannten: Die Poren sind unregelmäßig angeordnet. Es findet bei Gasdurchtritt eine Strömungsumlenkung statt. Unter der anspruchsgemäßen offenen Porosität sind folglich keine parallel verlaufenden, wabenartigen Kanäle in der aus DE 41 10 395 A1 bekannten Weise zu verstehen.

Der heterogene Katalysator befindet sich ferner im Inneren der Heizung.

Die benötigte Aktivierungsenergie des Katalysators wird mittels der elektrischen Heizung der Reaktion zugeführt. Elektrische Energie wird in thermische Energie umgewandelt und als Aktivierungsenergie für den Katalysator bereitgestellt. Da eine direkte Kopplung mit dem Katalysator möglich ist, kann die Energie unmittelbar am Ort des Bedarfs für die katalytisch unterstützte Re aktion bereitgestellt werden. Die Energiedichte kann stufenlos über die eingebrachte elektrische Leistung gesteuert werden, um zu guten Wirkungsgraden zu gelangen. Die benötigte thermische Energie wird in situ erzeugt. Energieverluste entstehen im wesentlichen nur durch die Wärmekapazitäten der beteiligten Stoffe. Es lassen sich daher auch aus diesem Grunde gute energetische Wirkungsgrade erzielen.

Durch die Porosität der Heizung wird eine besonders große Oberfläche bereitgestellt. Die vorteilhaften Wirkungen, die durch eine solche große Oberfläche erzielt werden können, werden anhand den nachfolgenden, beispielhaften Ausgestaltungen erläutert.

Als elektrische Heizung, also einem Mittel, das bei der Umwandlung von elektrischer Energie in Wärmeenergie einen hohen Wirkungsgrad aufweist, dient beispielsweise ein elektrischer Halbleiter. Aufgrund des elektrischen Widerstandes eines Halbleiters wird elektrische Energie in Wärmeenergie mit hohem Wirkungsgrad im Sinne der Erfindung umgewandelt.

In einer sehr einfachen Ausführungsform der Erfindung befindet sich der Katalysator lose innerhalb einer behälterförmigen, aus Halbleitermaterial bestehenden elektrischen Heizung. Es treten dann keine Befestigungsprobleme zwischen Katalysator und elektrischer Heizung auf.

Als elektrische Heizung wird dann z. B. das aus der Druckschrift DE 41 30 630 bekannte, poröse Durchfluß-Heizelement vorgesehen. Ist dieses rohrförmig ausgestaltet, so befindet sich das Katalysatormaterial z. B. als lose Schüttung im Inneren des Rohres. Die Stromzuführung zum Heizelement erfolgt z. B. in der aus der Druckschrift DE 42 09 685 bekannten Weise. Fluide Edukte werden vorzugsweise durch die Rohrwand hindurch zum Katalysator geleitet. Es werden so auf einfache Weise vorteilhaft nicht nur der Katalysator, sondern auch die Edukte aufgeheizt.

In einer weiteren Ausführungsform der Erfindung ist der Halbleiter mit dem Katalysatormaterial identisch. Das halbleitende Material übernimmt dann folglich eine Doppelfunktion. Es wird der Katalysator dann optimal mit Aktivierungsenergie versorgt, und es treten auch keine Befestigungsprobleme auf. Dotierte Materialien aus der Gruppe der Perowskite kommen in Betracht. Allerdings stellen derartige Fälle die Ausnahme dar und sind in der Regel teuer.

In einer weiteren Ausführungsform der Erfindung ist katalytisch aktives Material auf einer Struktur, mit anderen Worten auf einen Träger mit offener Porosität befestigt. Die Beheizung des Katalysators erfolgt so unmittelbar und großflächig. Hieraus resultiert eine besonders schnelle und wirtschaftliche Zufuhr der Aktivierungsenergie für den Katalysator. Außerdem weist der Katalysator dann die bekanntermaßen erforderliche große Oberfläche auf, um zu großen Umsätzen gelangen zu können. Diese Ausführungsform kann für eine Mehrzahl an Fällen realisiert werden. Es zeichnet sich gegenüber den beiden vorangegangenen Ausführungsformen durch seine Anwendungsbreite aus. Es kann sich hier allerdings nachteilhaft das Katalysatormaterial lösen und verloren gehen.

Bei der Wahl eines elektrischen Halbleitermaterials für die Elektroheizung ist insbesondere auf thermische Wechsel- sowie Korrosionsbeständigkeit zu achten, um zu langen Betriebszeiten zu gelangen. Keramische Halbleitermaterialien - also z. B. mit Bor oder Stickstoff dotiertes SiC - sind daher besonders geeignet. In Betracht kommen ferner insbesondere Übergangsmetallkarbide wie Titankarbid, Wolframkarbid, Nitride wie z. B. Titannitrid.

Das Halbleitermaterial wird mittels eines Beschichtungs- oder Kombinationsverfahrens mit dem Katalysatormaterial versehen. Die Wahl des Katalysators ist hierbei abhängig vom jeweiligen Einsatzgebiet des Systems. Grundsätzlich sind alle technisch bekannten Katalysatoren verwendbar.

In einer weiteren Ausgestaltung der Erfindung wird das Katalysatormaterial auf keramisches Halbleitermaterial geklebt. Als Klebstoff eignet sich ein keramischer Kleber. Diese Art der Befestigung ist einfach und zuverlässig.

Besonders geeignet sind Katalysatormaterialien, die sich durch ein Beschichtungsverfahren auf eine elektrische Heizung aufbringen lassen, da dann die Herstellung besonders einfach ist. Edelmetallkatalysatoren wie Pt oder Rh sowie Übergangsmetalloxidkatalysatoren wie V₂O₅, CuO, MnO₂ lassen sich mittels Beschichtungsverfahren zuverlässig aufbringen.

Anspruchsgemäß in situ beheizte Oxidationskatalysatoren lassen sich wirtschaftlich betreiben. In Betracht kommt insbesondere eine Schadstoffbeseitigung aus Verbrennungsabgasen durch eine katalytische Oxidation des toxischen Schadstoffinventars mit dem Restsauerstoff im Gas sowohl in stationären Anlagen als auch in mobilen Systemen. In einer weiteren Ausführungsform der Erfindung besteht daher der Katalysator aus Materialien auf der Basis von Edelmetallen (z. B. Pt oder Rh), aus Übergangsmetalloxiden wie CuO, MnO₂, V₂O₅ oder MoO₃ oder aus einem Vertreter der Perowskitgruppe.

In einer weiteren Ausführungsform der Erfindung ist der Katalysator in einer Abgasleitung, z. B. im Auspuff eines Kraftfahrzeuges angeordnet.

Einsatzgebiete für das anspruchsgemäße Verfahren sind:
- katalytischen Oxidation von toxischen Kohlenwasserstoffen wie beispielsweise Dioxine, Furane und/oder polyzyklische aromatische Kohlenwasserstoffe (PAH) bzw. von Reaktionsgasen wie CO in Abgasen entsprechender Verbrennungsanlagen,
- katalytische Oxidation von Kohlenstoffaerosolen aus Abgasen von Verbrennungsmotoren, (z. B. Dieselrußkatalysator)

Selbstverständlich kann auch beispielsweise ein Brennersystem in einer Heizungsanlage durch eine anspruchsgemäße Vorrichtung ersetzt werden, bei der die thermische Energie durch eine katalytische Oxidation der eingesetzten Brennstoffe (z.B. Erdgas) erzeugt wird. Aufgrund der diskontinuierlichen Betriebsweise solcher Anlagen ist für die Verwendung eines solchen katalysierten Heizprinzips eine entsprechende thermische Aktivierung des Katalysators vor jedem Heizzyklus erforderlich. Das Halbleiterträgermaterial steigert zudem den energetischen Wirkungsgrad, da es als Zwischenspeicher für die erzeugte Energiemenge fungiert und diese somit kontrollierter an seine Umgebung abgibt.

Die Erfindung wird im folgenden anhand eines Beispiels näher erläutert.

Ein poröser, mit Bor oder Stickstoff dotierter SiC-Körper wird mit einem Oxidationskatalysator auf der Basis von Edelmetallen (z.B. Pt, Rh) oder Übergangsmetalloxiden (z.B. V₂O₅, MoO₃) beschichtet. Hierfür wird zunächst auf der SiC-Oberfläche ein "keramischer Kleber" in Form von Al₂O₃ aufgebracht. Die Beschichtung erfolgt durch ein Tauchverfahren mit einer organischen oder wäßrigen Al-haltigen Lösung mit anschließender Trocknung.

Zur Herstellung eines belastungsfähigen Verbundes wird der keramische Körper bei Temperaturen zwischen 400 und 900 °C gesintert. Hierbei bildet sich aus dem auf der SiC Oberfläche befindlichen SiO₂ und dem Al₂O₃ ein Alumosilikat, das für die nötige Haftbeständigkeit sorgt. Abschließend erfolgt die Imprägnierung des Al₂O₃ mit der katalytisch aktiven Komponente (z.B. Pt, V₂O₅) ebenfalls durch ein Tauchverfahren mit organischen oder wäßrigen Lösungen und anschließender Sinterung bei 400 bis 1000 °C. Je nach Katalysatormaterial werden H₂[PtCl₆], RhCl₃, (NH₄)VO₃ oder AlCl₃-Lösungen bevorzugt eingesetzt.

Bei der Wahl einer Lösung ist darauf zu achten, daß die Differenz der Oberflächenspannungen zwischen der Lösung und dem keramischen Halbleitermaterial möglichst gering ist, um so zu einer gleichmäßigen Bedeckung zu gelangen. Organische Lösungen wie Hexan, Alkohol, Azeton sind daher wäßrigen Lösungen vorzuziehen.

Eine elektrische Kontaktierung erfolgt durch federndes Andrücken von elektrischen Leitern auf das Halbleitermaterial.

Der so hergestellte Verbund wird beispielsweise in die Abgasleitung eines Kraftfahrzeuges eingebaut.

## Patentansprüche

1. Verfahren für den Betrieb eines heterogenen Katalysators, mit den Schritten:
- eine elektrische Heizung wird bereitgestellt, die eine offene Porosität aufweist und in deren Inneren sich der heterogene Katalysator befindet
- mit Hilfe des Katalysators wird eine chemische Oxidationsreaktion katalysiert
- die für die katalytische Reaktion benötigte Aktivierungsenergie wird mittels der elektrischen Heizung derart gesteuert, daß die zugeführte Energie nur der Energie entspricht, die für eine katalytische Reaktion ohne Reaktionen eines Verbrennungsprozesses notwendig ist.

2. Verfahren nach Anspruch 1,
**dadurch gekennzeichnet,**
**daß** als elektrische Heizung ein elektrischer Halbleiter eingesetzt wird.

3. Verfahren nach einem der Ansprüche 1 bis 2,
**dadurch gekennzeichnet,**
**daß** eine elektrische Heizung eingesetzt wird, die zumindest teilweise aus Katalysatormaterial besteht.

4. Verfahren nach einem der Ansprüche 1 bis 3,
**dadurch gekennzeichnet,**
**daß** die offene Porösität der elektrischen Heizung nicht durch eine Schüttung gebildet wird.

5. Verfahren nach einem der vorhergehenden Ansprüche 1 bis 4, bei dem die Verfahrensschritte im Auspuff eines Kraftfahrzeuges durchgeführt werden.

## Claims

1. A method of operating a heterogeneous catalyst, comprising the following steps:
- an electric heater is provided which possesses open porosity and in the interior of which the heterogeneous catalyst is situated,
- a chemical oxidation reaction is catalysed with the aid of the catalyst,
- the activation energy necessary for the catalytic reaction is controlled by means of the electric heater so that the energy supplied only corresponds to the energy which is necessary for a catalytic reaction without reactions of a combustion process.

2. A method according to claim 1,
**characterised in that**
an electrical semiconductor is used as an electric heater.

3. A method according to either one of claims 1 or 2,
**characterised in that**
an electric heater is used which consists at least in part of catalyst material.

4. A method according to any one of claims 1 to 3,
**characterised in that**
the open porosity of the electric heater is not formed by loose material.

5. A method according to any one of the preceding claims 1 to 4, wherein the steps of the method are conducted in the exhaust of a motor vehicle.

## Revendications

1. Procédé pour le fonctionnement d'un catalyseur hétérogène, comprenant les étapes consistant à :
- disposer un chauffage électrique, qui présente une porosité ouverte et dans l'intérieur duquel se trouve le catalyseur hétérogène ;
- catalyser une réaction chimique d'oxydation à l'aide du catalyseur ;
- régler l'énergie d'activation nécessaire pour la réaction catalytique à l'aide du chauffage électrique de sorte que l'énergie fournie ne correspond qu'à l'énergie qui est nécessaire pour une réaction catalytique sans réaction d'un processus de combustion.

2. Procédé selon la revendication 1, **caractérisé en ce que**
l'on met en oeuvre comme chauffage électrique, un semi-conducteur électrique.

3. Procédé selon l'une quelconque des revendications 1 à 2, **caractérisé en ce que**
l'on met en oeuvre un chauffage électrique qui est constitué au moins partiellement par le matériau catalytique.

4. Procédé selon l'une quelconque des revendications 1 à 3, **caractérisé en ce que**
la porosité ouverte du chauffage électrique n'est pas formée par un tassement.

5. Procédé selon l'une quelconque des revendications précédentes 1 à 4, dans lequel les étapes du procédé sont réalisées dans l'échappement d'un véhicule automobile.
